# EUROPEAN PATENT SPECIFICATION

(11) **EP 1 332 725 B1**
(45) Date of publication and mention of the grant of the patent: **28.11.2007**
(21) Application number: 03425027.4
(22) Date of filing: 22.01.2003
(51) Int. Cl.: A61C 1/00, A61C 17/02

(54) **An apparatus for supplying and heating fluids in dental units**
Versorgungs- und Erwärmungsgerät für Flüssigkeiten in zahnärztlichen Einheiten
Dispositif pour l'alimentation et l'échauffement de fluides dans les unités dentaires

(30) Priority: 31.01.2002 IT MI20020053
(43) Date of publication of application: 06.08.2003
(73) Proprietor: CASTELLINI S.p.A., 40013 Castel Maggiore (Bologna) (IT)
(72) Inventor: Castellini, Franco, 40124 Bologna (IT)
(74) Representative: Lanzoni, Luciano

(56) References cited:
- EP-A- 0 317 704
- DE-B- 1 025 565
- US-A- 3 638 619

## Description

The present invention relates to an apparatus for supplying and heating fluids in dental units.

It is known that dental units have water and air systems where the water line supplies fluids used by dental equipment and patients (water or physiological saline for tumblers and handpieces), or consumer units (swilling water for the spittoon), while the air line is used for certain items of equipment (air spray handpieces, cooling air and driving air).

With increases in general standards of-hygiene and with dental apparatus and equipment becoming more and more "fragile", several design solutions have been found for the water systems of dental units, not only to guarantee their efficient operation and durability but also to maintain the "sterility" of the conduits while at the same time providing a simple and practical fluid supply system that reaches all the branches of the dental unit.

At the present time, the basic structure of the fluid circuit comprises a first main line supplying water from the mains, and a second main line supplying air from an external source (compressor), each of these lines having a plurality of branches leading to the operating and accessory equipment, that is to say, the handpieces, the tumbler water spout and the spittoon.

The present specification deals with the water circuit of a dental unit, in particular, the system that supplies fluid to the spout through which the fluid is filled into the tumbler.

At present, this spout, which is equipped with shutoff means that open and close the conduit (in some cases time-switched), is supplied through an ordinary branch of the main conduit that channels the fluid (usually water) directly to the tumbler.

An apparatus according to the aforementioned features is known from EP317704. The apparatus comprises a housing containing a chamber with two inlet apertures arranged adjacent to each other and connected to cold- and warm-water feedlines, and an outlet aperture for the emerging mixed water. A control cartridge is arranged in the chamber for adjusting the balance of the mix of the cold water and the warm water, for obtaining a desired temperature of the supplied water. Outside the housing are provided means for heating the water which is sent to the chamber as warm water. The mixed water is then sent to a plurality of medical instruments and/or to a tumbler.

This type of structure for this part of the circuit, however, has several disadvantages due mainly to the fact that the water may remain motionless in the conduit for extended periods of time since it is required at irregular, infrequent intervals during patient sessions.

In other words, this secondary conduit cannot be kept at the same level of sterility as the other branches of the water circuit and using the same fluid heating control system.

The aim of the present invention is to overcome the above mentioned disadvantages by providing a fluid supply and heating apparatus for the tumbler water spout forming part of the water circuit, without thereby altering the structure of the water circuit itself.

This aim is achieved through an apparatus for supplying and heating fluids in dental units according to claim 1.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a diagram representing the water and air circuit of the dental unit equipped with the apparatus for supplying and heating fluids according to the present invention;
- Figure 2 shows an enlarged detail A of the apparatus illustrated in Figure 1.

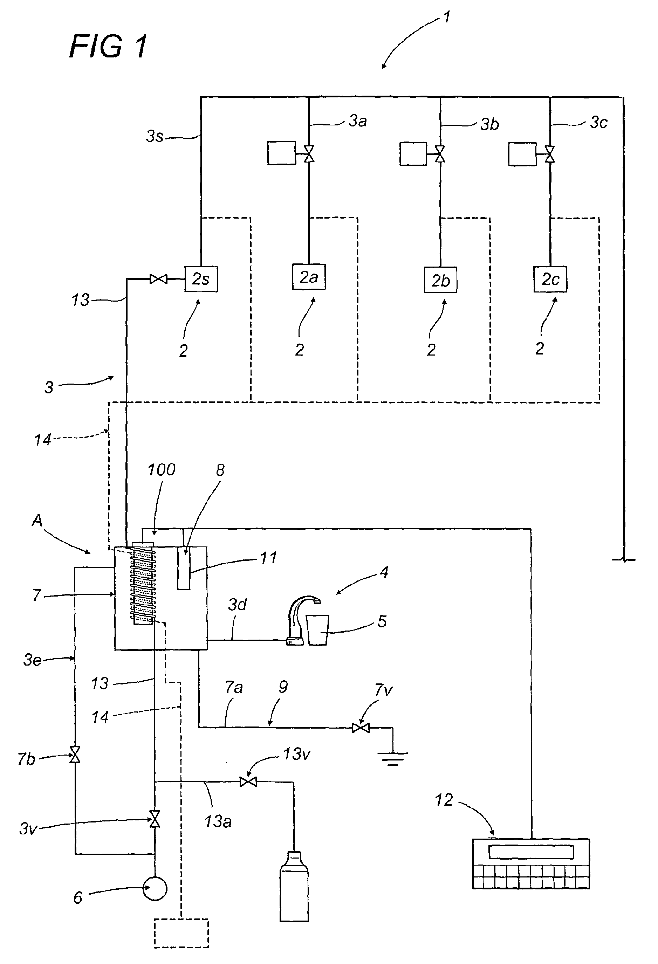

With reference to the accompanying drawings, in particular Figure 1, the apparatus according to the present invention, denoted in its entirety by the numeral 100, is used to supply and heat fluids in dental units 1.

These dental units 1 basically comprise, at least insofar as is relevant to the present invention, main medical instruments 2, accessory instruments 4 and a water circuit 3.

More specifically, the medical instruments 2 may be dental handpieces, for example, a turbine labelled 2a, a micromotor 2b, a scaler 2c, and a syringe 2s, whilst one of the accessory instruments consists of a spout 4 through which a fluid is filled into a tumbler 5.

The fluid (water) fed to the medical and accessory instruments 2 and 4 by the water circuit 3 comes from a main supply circuit 6 and reaches the instruments through corresponding circuit legs or branches 3a, 3b, 3c, 3s, 3d.

The apparatus according to the invention comprises an independent container 7 for the fluid to be supplied to the spout 4. This independent container 7 is located between and connects the water circuit 3 and the spout 4 for the tumbler 5.

The independent container 7 is equipped with means 8 for varying and controlling the temperature of the fluid inside the container 7 itself.

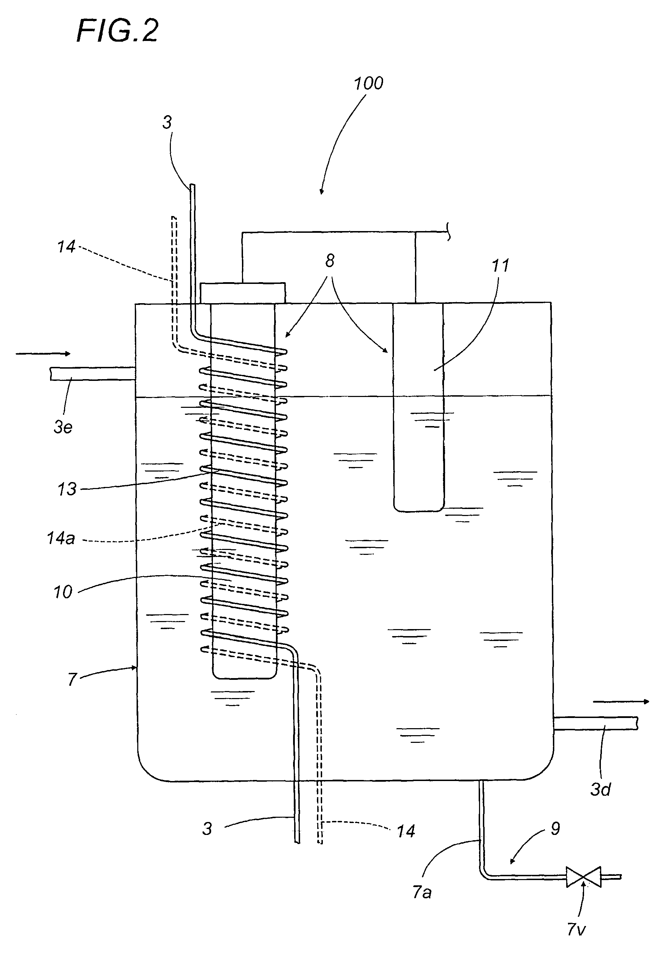

Looking in more detail, with reference also to Figure 2, the independent container 7 has means 9 constituting a system for continuously draining the fluid so as to continuously renew the fluid inside the container 7. In other words, the container 7 may have a drainage conduit 7a leading out of the bottom of it and equipped with a valve 7v controlled from the outside in such a way as to allow controlled outflow of the fluid.

The independent container 7 is also equipped with at least one conduit 13 immersed in the fluid inside the container 7 and through which passes the fluid which has to reach the branches 3a, 3b, 3c, 3s that supply the main medical instruments 2.

Thus, as shown in Figures 1 and 2, the independent container 7 is located directly on the water circuit 3 and the circuit branch 3d that supplies the spout 4 leads out of the container 7 and connects the latter to the spout 4.

The main leg of the water circuit 3 has another branch 3e that supplies fluid to the independent container 7 and that is equipped with suitable shutoff means 7b for controlling the inflow of the fluid while the rest of the fluid flows through the independent container 7.

The aforementioned temperature variation and control means 8 may comprise a heating element 10 positioned inside the independent container 7 and designed to heat the fluid inside the container 7. Working in conjunction with the heating element 10 there is a thermostat 11 acting on the heating element 10 and designed to switch the heating element 10 on and off according to the temperature of the fluid.

If the dental unit 1 is equipped with a microprocessor unit 12 for controlling its main and accessory functions, in particular the main medical instruments 2 and the accessory instruments 4 (see Figure 1), the heating element 10 and the thermostat 11 may be connected to the microprocessor unit 12 in such a way as to display, and permit the direct setting of, the temperature inside the container 7.

In practice, the aforementioned conduit 13 is an integral part of the water circuit 3 and passes through the independent container 7: this means that the fluid passing through the conduit 13 is heated as it passes close to the heating element 10.

As shown in Figure 1, the water circuit 3 may have a second leg 13a for supplying alternative fluids to the main medical instruments 2. More specifically, the second leg 13a may be used to supply physiological saline or a disinfectant /sterilising liquid.

The second leg 13a that supplies the alternative fluids may also use the independent container 7, since it is connected, upstream of the independent container 7, to the main leg 3 which is positioned inside and passes through the independent container 7 in the proximity of the heating element 10: thus, the temperature of the alternative fluid can also be varied, that is to say, the fluid can be heated as it passes.

As also shown in Figure 2, the conduit 13 is coiled around the heating element 10 so as to optimise the heating effect on the alternative fluid flowing through it.

Similarly, the dental unit 1 also includes an air circuit 14 (represented by the broken line in Figures 1 and 2) that supplies spray air to the main medical instruments 2 and that is also designed to make use of the independent container 7. Thus, a section 14a of the spray air circuit 14 may be positioned so that it passes through the independent container 7 close to the heating element 10, enabling the temperature of the spray air to be varied, that is to say, enabling the spray air to be heated.

Like the conduit 13, the section 14a of the air circuit 14 is also preferably wound around the heating element 10 to form a coil parallel with the first coil formed by the conduit 13 of the water circuit 3.

For optimum and rational control of fluid flow through the conduit 13, customary check valves 3v and 13v are used to select the fluids flowing into the conduit 13 and, hence, to the medical instruments as required.

An apparatus made as described above thus achieves the preset aims thanks to the addition of a simple structural feature, that is to say, an independent container through which it is possible to provide a hygienically safe supply of fluid to the tumbler at the temperature most suitable for the patient being treated.

This container, besides supplying water to the tumbler, can also be used to heat fluids, such as water, physiological saline, disinfectant /sterilising liquids and spray air, by making the related circuit branches pass through the container and using the same heating element as that used to heat the fluid inside the container which supplies the tumbler.

The invention described can be subject to modifications and variations without thereby departing from the scope of the inventive concept.

## Claims

1. An apparatus for supplying and heating fluids in dental units, the dental units (1) comprising at least:
- main medical instruments (2), such as dental handpieces (2a, 2b, 2c, 2s), and accessory instruments at least including a spout (4) through which a fluid is filled into a tumbler (5);
- a water circuit (3) for supplying fluid from at least one main supply (6), through corresponding circuit legs or branches (3a, 3b, 3c, 3s, 3d) to the main and accessory instruments;
- an independent container (7) containing the fluid to be supplied to the spout (4) and located between and connecting the water circuit (3) and the spout (4) that fills the fluid into the tumbler (5); the independent container (7) being equipped with means (8) for varying and controlling the temperature of the fluid inside the container (7); the apparatus being **characterised in that** the independent container (7) is equipped with at least one conduit (13) immersed in the fluid inside the container (7) and through which passes the fluid which has to reach the branches (3a, 3b, 3c, 3s) that supply the main medical instruments (2).

2. The apparatus according to claim 1, **characterised in that** the independent container (7) is equipped with means (9) constituting a system for continuously draining the fluid so as to continuously renew the fluid inside the container (7).

3. The apparatus according to claim 1, **characterised in that** the independent container (7) is located directly on the water circuit (3) and the circuit branch (3d) that supplies the spout (4) leads out of the container (7) and connects the latter to the spout (4).

4. The apparatus according to claim 1, **characterised in that** the water circuit (3) has another branch (3e) that supplies fluid to the independent container (7).

5. The apparatus according to claim 1, **characterised in that** the temperature variation and control means (8) comprise a heating element (10) positioned inside the independent container (7) and designed to heat the fluid inside the container (7).

6. The apparatus according to claim 1, **characterised in that** the temperature variation and control means (8) comprise a heating element (10) positioned inside the independent container (7) and designed to heat the fluid inside the container (7), and a thermostat (11) acting on the heating element (10) and designed to switch the heating element (10) on and off according to the temperature of the fluid.

7. The apparatus according to claim 1, where a microprocessor unit (12) controls the main and accessory functions of the dental unit (1), of the main medical instruments (2), and of the accessory instruments (4), **characterised in that** the temperature variation and control means (8) comprise a heating element (10) positioned inside the independent container (7) and designed to heat the fluid inside the container (7), and a thermostat (11) acting on the heating element (10) and designed to switch the heating element (10) on and off according to the temperature of the fluid; the heating element (10) and the thermostat (11) being connected to the microprocessor unit (12) in such a way as to display, and permit the direct setting of, the temperature inside the container (7).

8. The apparatus according to claim 1, **characterised in that** the conduit (13) is an integral part of the water circuit (3) and passes through the independent container (7) close to the temperature variation and control means (8) so that the temperature of the fluid flowing inside the conduit (13) itself can be varied.

9. The apparatus according to claim 1, where the water circuit (3) has at least one second leg (13a) for supplying alternative fluids to the main medical instruments (2) and to the accessory instruments (4), **characterised in that** the second alternative fluid supply leg (13a) is connected to the water circuit (3) upstream of the independent container (7) so that the alternative fluid flows into the conduit (13); the conduit (13) being positioned inside and passing through the independent container (7) in the proximity of the means (8) for varying and controlling the temperature of the fluid in such a way as to vary the temperature of the alternative fluid flowing through.

10. The apparatus according to claim 8 or 9, **characterised in that** the conduit (13) is coiled around a heating element (10) constituting a part of the temperature variation and control means (8).

11. The apparatus according to claim 1, where the dental unit (1) has an air circuit (14) for supplying at least a spray fluid to the main medical instruments (2), **characterised in that** a section (14a) of the spray air circuit (14) is positioned inside and passes through the independent container (7) in the proximity of the means (8) for varying and controlling the temperature of the fluid in such a way as to vary the temperature of the spray fluid.

12. The apparatus according to claim 11, **characterised in that** the section (14a) of the air circuit (14) is coiled around a heating element (10) constituting a part of the temperature variation and control means (8).

## Patentansprüche

1. Versorgungs- und Erwärmungsgerät für Flüssigkeiten in zahnärztlichen Einheiten (1), wobei die zahnärztlichen Einheiten wenigstens enthalten:
- medizinische Hauptinstrumente (2), wie zahnärztliche Handstücke (2a, 2b, 2c, 2s), sowie Zusatzinstrumente, enthaltend wenigstens eine Abgabetülle (4), durch welche eine Flüssigkeit in einen Becher (5) gefüllt wird;
- einen Wasserkreis (3) zum Zuführen von Flüssigkeit von wenigstens einer Netzleitung (6) durch entsprechende Neben- oder Zweigleitungen (3a, 3b, 3c, 3s, 3d) zu den Haupt- und Zubehörinstrumenten;
- einen unabhängigen Behälter (7), enthaltend die an die Tülle (4) zu leitende Flüssigkeit und angeordnet in verbindender Weise zwischen dem Wasserkreis (3) und der Tülle (4), welche die Flüssigkeit in den Becher (5) füllt, wobei der unabhängige Behälter (7) mit Mitteln (8) zur Veränderung und zur Steuerung der Temperatur der Flüssigkeit im Inneren des Behälters (7) versehen ist; wobei das Gerät **dadurch gekennzeichnet ist, dass** der unabhängige Behälter (7) mit wenigstens einer Leitung (13) versehen ist, eingetaucht in die Flüssigkeit im Inneren des Behälters (7), und durch welche die Flüssigkeit läuft, die die Zweigleitungen (3a, 3b, 3c, 3s) erreichen soll, welche die medizinischen Hauptinstrumente (2) speist.

2. Gerät nach Patentanspruch 1, **dadurch gekennzeichnet, dass** der unabhängige Behälter (7) mit Mitteln (9) versehen ist, welche ein System zum kontinuierlichen Ablassen der Flüssigkeit bilden, so dass die Flüssigkeit im Inneren des Behälters (7) ständig erneuert wird.

3. Gerät nach Patentanspruch 1, **dadurch gekennzeichnet, dass** der unabhängige Behälter (7) direkt an dem Wasserkreis (3) angeordnet ist und die Zweigleitung (3d), welche die Tülle (4) speist, aus dem Behälter (7) heraus führt und letzteren mit der Tülle (4) verbindet.

4. Gerät nach Patentanspruch 1, **dadurch gekennzeichnet, dass** der Wasserkreis (3) eine andere Zweigleitung (3e) hat, welche Flüssigkeit in den unabhängigen Behälter (7) leitet.

5. Gerät nach Patentanspruch 1, **dadurch gekennzeichnet, dass** die Mittel (8) zur Veränderung und Steuerung der Temperatur ein Heizelement (10) enthalten, positioniert im Inneren des unabhängigen Behälters (7) und dazu bestimmt, die Flüssigkeit im Inneren des Behälters (7) zu erwärmen.

6. Gerät nach Patentanspruch 1, **dadurch gekennzeichnet, dass** die Mittel (8) zur Veränderung und Steuerung der Temperatur ein Heizelement (10) enthalten, positioniert im Inneren des unabhängigen Behälters (7) und dazu bestimmt, die Flüssigkeit im Inneren des Behälters (7) zu erwärmen, sowie einen Thermostat (11), der auf das Heizelement (10) wirkt und dazu bestimmt ist, das Heizelement (10) ein- und auszuschalten, je nach der Temperatur der Flüssigkeit.

7. Gerät nach Patentanspruch 1, bei welchem eine Mikroprozessoreinheit (12) die Haupt- und Hilfsfunktionen der zahnärztlichen Einheit (1), der medizinischen Hauptinstrumente (2) und der Zusatzinstrumente (4) steuert, **dadurch gekennzeichnet, dass** die Mittel (8) zur Veränderung und Steuerung der Temperatur ein Heizelement (10) enthalten, positioniert im Inneren des unabhängigen Behälters (7) und dazu bestimmt, die Flüssigkeit im Inneren des Behälters (7) zu erwärmen, und einen Thermostat (11), der auf das Heizelement (10) wirkt und dazu bestimmt ist, das Heizelement (10) ein- und auszuschalten, je nach der Temperatur der Flüssigkeit; wobei das Heizelement (10) und der Thermostat (11) auf solche Weise an die Mikroprozessoreinheit (12) angeschlossen sind, dass die Anzeige und die direkte Einstellung der Temperatur im Inneren des Behälters (7) erlaubt ist.

8. Gerät nach Patentanspruch 1, **dadurch gekennzeichnet, dass** die Leitung (13) ergänzender Teil des Wasserkreises (3) ist und durch den unabhängigen Behälter (7) verläuft, und zwar dicht an den Mitteln (8) zur Veränderung und Steuerung der Temperatur, so dass die Temperatur der im Inneren der Leitung (13) selbst fliessenden Flüssigkeit verändert werden kann.

9. Gerät nach Patentanspruch 1, bei welchem der Wasserkreis (3) wenigstens eine zweite Zweigleitung (13a) zum Zuführen von alternativen Flüssigkeiten an die medizinischen Hauptinstrumente (2) und an die Zusatzinstrumente (4) enthält, **dadurch gekennzeichnet, dass** die zweite Zweigleitung (13a) zum Zuführen der alternativen Flüssigkeit an den Wasserkreis (3) stromaufwärts des unabhängigen Behälters (7) angeschlossen ist, so dass die alternative Flüssigkeit in die Leitung (13) fliesst; wobei die Leitung (13) im Inneren des unabhängigen Behälters (7) positioniert ist und durch diesen verläuft, und zwar in der Nähe der Mittel (8) zur Veränderung und Steuerung der Temperatur der Flüssigkeit auf solche Weise, dass die Temperatur der durchlaufenden alternativen Flüssigkeit verändert wird.

10. Gerät nach Patentanspruch 8 oder 9, **dadurch gekennzeichnet, dass** die Leitung (13) um ein Heizelement (10) gewunden ist, welches Teil der Mittel (8) zur Veränderung und Steuerung der Temperatur bildet.

11. Gerät nach Patentanspruch 1, bei welchem die zahnärztliche Einheit einen Luftkreis (14) zum Zuführen von wenigstens eines Sprühfluids an die medizinischen Hauptinstrumente (2) enthält, **dadurch gekennzeichnet, dass** ein Abschnitt (14a) des Sprühluftkreises (14) im Inneren des unabhängigen Behälters (7) angeordnet ist und durch diesen verläuft, und zwar in der Nähe der Mittel (8) zur Veränderung und Steuerung der Temperatur und auf solche Weise, dass die Temperatur des Sprühfluids verändert wird.

12. Gerät nach Patentanspruch 11, **dadurch gekennzeichnet, dass** der Abschnitt (14a) des Luftkreises (14) um ein Heizelement (10) gewunden ist, welches Teil der Mittel (8) zur Veränderung und Steuerung der Temperatur bildet.

## Revendications

1. Un dispositif pour alimenter et chauffer des fluides dans des unités dentaires, telles unités dentaires (1) comprenant au moins :
- des instruments médicaux principaux (2), comme des pièces à main dentaires (2a, 2b, 2c, 2s), et des instruments accessoires incluant au moins une bouche (4) par laquelle un fluide est versé dans un gobelet (5) ;
- un circuit d'eau (3) servant à alimenter un fluide provenant d'au moins une alimentation principale (6) à travers des branches ou ramifications de circuit (3a, 3b, 3c, 3s; 3d) correspondantes et jusqu'au niveau des instruments principaux et accessoires ;
- un récipient indépendant (7) contenant le fluide devant être alimenté à la bouche (4), interposé entre et reliant le circuit d'eau (3) et la bouche (4) versant le fluide dans le gobelet (5), le récipient indépendant (7) étant équipé de moyens (8) servant à faire varier et à contrôler la température du fluide à l'intérieur du récipient (7) lui-même ; le dispositif étant **caractérisé en ce que** le récipient indépendant (7) est équipé d'au moins un conduit (13) immergé dans le fluide contenu dans le récipient (7) et à travers lequel passe le fluide devant atteindre les ramifications (3a, 3b, 3c, 3s) qui alimentent les instruments médicaux principaux (2).

2. Le dispositif selon la revendication 1, **caractérisé en ce que** le récipient indépendant (7) est équipé de moyens (9) constituant un système d'évacuation continue du fluide de manière à renouveler en permanence le fluide contenu dans le récipient (7).

3. Le dispositif selon la revendication 1, **caractérisé en ce que** le récipient indépendant (7) est directement situé sur le circuit d'eau (3) et la ramification de circuit (3d) qui alimente la bouche (4) débouche à l'extérieur du récipient (7) et relie ce dernier à la bouche (4).

4. Le dispositif selon la revendication 1, **caractérisé en ce que** le circuit d'eau (3) comprend une autre ramification (3e) qui alimente un fluide dans le récipient indépendant (7).

5. Le dispositif selon la revendication 1, **caractérisé en ce que** les moyens (8) de variation et de contrôle de la température comprennent un élément chauffant (10) placé à l'intérieur du récipient indépendant (7) et destiné à chauffer le fluide contenu dans ledit récipient (7).

6. Le dispositif selon la revendication 1, **caractérisé en ce que** les moyens (8) de variation et de contrôle de la température comprennent un élément chauffant (10) placé à l'intérieur du récipient indépendant (7) et destiné à chauffer le fluide contenu dans ledit récipient (7), et un thermostat (11) agissant sur l'élément chauffant (10) et destiné à activer ou désactiver ledit élément chauffant (10) en fonction de la température du fluide.

7. Le dispositif selon la revendication 1, où une unité à microprocesseur (12) contrôle les fonctions principales et accessoires de l'unité dentaire (1), des instruments médicaux principaux (2) et des instruments accessoires (4), **caractérisé en ce que** les moyens (8) de variation et de contrôle de la température comprennent un élément chauffant (10) placé à l'intérieur du récipient indépendant (7) et destiné à chauffer le fluide contenu dans ledit récipient (7), et un thermostat (11) agissant sur l'élément chauffant (10) et destiné à activer ou désactiver ledit élément chauffant (10) en fonction de la température du fluide ; l'élément chauffant (10) et le thermostat (11) étant reliés à l'unité à microprocesseur (12) de manière à afficher la température présente à l'intérieur du récipient (7) et à en permettre un réglage direct.

8. Le dispositif selon la revendication 1, **caractérisé en ce que** le conduit (13) fait partie intégrante du circuit d'eau (3) et passe à travers le récipient indépendant (7) à proximité des moyens (8) de variation et de contrôle de la température de manière à pouvoir faire varier la température du fluide qui passe dans le conduit (13) lui-même.

9. Le dispositif selon la revendication 1, où le circuit d'eau (3) présente au moins une deuxième branche (13a) servant à alimenter des fluides alternatifs aux instruments médicaux principaux (2) et aux instruments accessoires (4), **caractérisé en ce que** la deuxième branche (13a) d'alimentation de fluides alternatifs est raccordée au circuit d'eau (3) en amont du récipient indépendant (7) de manière à permettre le passage du fluide alternatif dans le conduit (13) ; ledit conduit (13) étant placé à l'intérieur du récipient indépendant (7) et traversant ce dernier à proximité des moyens (8) de variation et de contrôle de la température du fluide de manière à faire varier la température du fluide alternatif qui y passe.

10. Le dispositif selon la revendication 8 ou 9, **caractérisé en ce que** le conduit (13) est enroulé en spirale autour d'un élément chauffant (10) qui constitue une partie des moyens (8) de variation et de contrôle de la température.

11. Le dispositif selon la revendication 1, où l'unité dentaire (1) comprend un circuit d'air (14) servant à alimenter au moins un fluide spray aux instruments médicaux principaux (2), **caractérisé en ce qu'**un tronçon (14a) du circuit d'air spray (14) est situé à l'intérieur du réservoir indépendant (7) et traverse ce dernier à proximité des moyens (8) de variation et de contrôle de la température du fluide, de manière à faire varier la température du fluide spray.

12. Le dispositif selon la revendication 11, **caractérisé en ce que** le tronçon (14a) du circuit d'air (14) est enroulé en spirale autour d'un élément chauffant (10) qui constitue une partie des moyens (8) de variation et de contrôle de la température.
